Europäisches Patentamt

European Patent Office

Office européen des brevets

(11) Veröffentlichungsnummer: **0 529 695 A2**

# (12) EUROPÄISCHE PATENTANMELDUNG

(21) Anmeldenummer: **92119540.0**

(22) Anmeldetag: **28.05.90**

(51) Int. Cl.5: **C08F 2/24**, C04B 24/26

Diese Anmeldung is am 16 - 11 - 1992 als Teilanmeldung zu der unter INID-Kode 60 erwähnten Anmeldung eingereicht worden.

(30) Priorität: **31.05.89 AT 1324/89**
**31.05.89 AT 1326/89**

(43) Veröffentlichungstag der Anmeldung:
**03.03.93 Patentblatt 93/09**

(60) Veröffentlichungsnummer der früheren Anmeldung nach Art. 76 EPÜ: **0 401 200**

(84) Benannte Vertragsstaaten:
**BE CH DE FR GB IT LI LU NL**

(71) Anmelder: **Chemco Bausysteme Gesellschaft m.b.H.**
**Muthgasse 109**
**A-1190 Wien(AT)**

(72) Erfinder: **Axmann, Heinz, Dr.**
**Weidlinger Strasse 37**
**A-3400 Klosterneuburg(AT)**
Erfinder: **Legradic, Vladimir, Dipl.-Ing. Dr.**
**Hauptstrasse 6**
**A-3004 Ried(AT)**

(74) Vertreter: **Puchberger, Peter, Dipl.-Ing. et al**
**Patentanwaltskanzlei Dipl.-Ing. Georg Puchberger Dipl.-Ing. Rolf Puchberger Dipl.-Ing. Peter Puchberger Singerstrasse 13**
**Postfach 55**
**A-1010 Wien (AT)**

(54) **Verfahren zur Herstellung von Polymerdispersionen.**

(57) Die Erfindung betrifft ein Verfahren zur Herstellung von Copolymerisaten durch radikalische Polymerisation mehrerer olefinisch ungesättigter Monomeren in wäßriger Emulsion in Gegenwart von Emulgatoren, wobei mindestens eines der Monomeren eine Löslichkeit von > 5 Gew.-% in Wasser unter den Reaktionsbedingungen aufweist, dadurch gekennzeichnet, daß in einem ersten Schritt das oder die wasserlöslichen Monomeren in Gegenwart der Emulgatoren bis zu einem Umsatz von mindestens 15%, vorzugsweise 20 - 30%, polymerisiert und danach das oder die weiteren Monomeren dem Reaktionsgemisch, gegebenenfalls stufenweise, zugesetzt werden.

EP 0 529 695 A2

Die vorliegende Erfindung betrifft ein Verfahren zur Herstellung von Polymerdispersionen, die für die Herstellung konzentrierter Mischungen mit hydraulisch abbindenden Bindemitteln besonders geeignet sind. Es ist bereits bekannt, daß Zusätze von wäßrigen Acrylatdispersionen zu hydraulisch abbindenden Bindemitteln Verbesserungen der mechanischen Eigenschaften wie Biegezugfestigkeit, Bruchfestigkeit, Elastizitätsmodul, Schlagzähigkeit usw. bewirken.

Copolymerisate, welche unter Mitverwendung wasserlöslicher Monomere hergestellt werden sind für verschiedene Zwecke bekannt: So beschrieb das französische Patent Nr. 8027085 eine polymere Dispersion unter Mitverwendung von N-Methylolacrylamid und Acrylnitril neben Styrol und Butadien als Hauptkomponenten. Die verschiedenen Dispersionen haben einen Trockensubstanzgehalt von ca. 46% und werden als Zusatz zu zementären Mörteln verwendet. Das französische Patent Nr. 0072735 hat zum Inhalt ein Zweistufenverfahren zur Polymerisation von Vinylacetat, N-Methylolacrylamid und Acrylamid, wobei in der ersten Stufe ein Schutzkolloid aus o.g. Monomeren und Polyethylenglykol durch eine Lösungspolymerisation hergestellt wird.

In einer nachfolgenden Stufe werden in einer Emulsionspolymerisation unter Verwendung von Vinylazetat und anderen Comonomeren Polymerdispersionen hergestellt, die 50 - 55 % Trockensubstanz beinhalten und als Rohstoffe für die Herstellung von Farben, Klebstoffen, Papier, Textil und Zusatzmittel für Mörtel Verwendung finden. Das kanadische Patent Nr. 1143385 beschreibt einen Styrol/Butadien-Latex, der 0,5 - 5 %, berechnet auf das Polymer, N-Methylolacrylamid oder je 0,5 - 5 % N-Methylolacrylamid und Acrylnitril, berechnet auf das Polymer, beinhaltet. Diese Zusammensetzung wird als Zusatz zu zementären Mörteln verwendet.

Ein bevorzugtes Anwendungsgebiet für derartige Kompositionen ist die Verwendung als Zusätze für hydraulisch abbindende Bindemittel. Die Probleme bei der Herstellt solcher Copolymerisate bestehen

a) in der Herstellt solcher Polymerdispersionen mit einer hohen Trockensubstanz, die Zementmischungen mit 55 und mehr Gew.-% Kunststoffanteil, bezogen auf Zement, ermöglichen;

b) in der gleichmäßigen Zudosierung des stark zu Kondensationsreaktionen neigenden Monomers N-Methylolacrylamid;

c) in der Herstellung von Dispersionen, die in der Mischung mit hydraulischen Bindemitteln eine anwendungsgerechte Konsistenz ergeben.

Es wurde überraschenderweise gefunden, daß man diese Probleme vermeiden kann, wenn man vor der eigentlichen Emulsionspolymerisation in einem eigenen Schritt nur die wasserlöslichen Comonomere gemeinsam mit den für die anschließende Emulsionpolymerisation benötigten Emulgatoren in einer Lösungspolymerisation vorpolymersiert und unmittelbar darauf die Emulsionspolymerisation durchführt.

Gegenstand der Erfindung ist daher ein Verfahren zur Herstellung von Copolymerisaten durch radikalische Polymerisation mehrerer olefinisch ungesättigter Monomeren in wäßriger Emulsion in Gegenwart von Emulgatoren, wobei mindestens eines der Monomeren eine Löslichkeit von>5 Gew.-% in Wasser unter den Reaktionsbedingungen aufweist, dadurch gekennzeichnet, daß in einem ersten Schritt das oder die wasserlöslichen Monomeren in Gegenwart der Emulgatoren bis zu einem Umsatz von mindestens 15 %, vorzugsweise 20 - 30 %, polymerisiert und danach das oder die weiteren Monomeren dem Reaktionsgemisch, gegebenenfalls stufenweise, zugesetzt werden.

Im Gegensatz zu Dispersionen, die aus gleichen Komponenten in einem üblichen Einschrittverfahren hergestellt sind, weisen die erfindungsgemäßen erhältlichen Dispersionen eine weit niedrigere Viskosität der Zementschlämme auf, was für eine bessere Benetzung spricht.

Eigene kinetische Untersuchungen haben gezeigt, daß nach Beendigung der ersten Stufe (Lösungspolymerisation) ein Polymerisationsumsatz von nur ca. 25 % erreicht war, sodaß beim Einsetzen der Emulsionspolymerisation noch ausreichend waserlösliche Mono- und Oligomere im Reaktionsgemisch vorhanden sind, um mit den wasserunlöslichen Monomeren zu copolymerisieren. Der Gehalt an Polymeren wurde durch Ausfällen in Äthanol bestimmt.

Die bessere Benetzung der nach dem neuen Verfahren hergestellten Dispersionen äußert sich auch in den Eigenschaften der ausgehärteten zementären Mischung, wie höhere Dehnung und bessere Rückstellelastizität, Biegsamkeit.

Das Ergebnis sind Polymer/Zementmischungen mit 55-70 % Kunststoffanteil, die in der Dehnbarkeit bei gleichem Polymer/Zementmischungsverhältnis den bei einer durch normales einstufiges Polymerisationsverfahren hergestellten, sonst gleichen Dispersionen überlegen sind, oder die erfindungsgemäßen Polymerdispersionen vertragen größere Mengen Zementzusatz bei gleichen mechanischen Eigenschaften wie das weiter unten dargelegt ist.

Bevorzugte Polymerzusammensetzungen sind den Patentansprüchen und der Beschreibung zu entnehmen.

2

Die Monomeren werden vorzugsweise in wäßriger Emulsion bei pH 2-6 polymerisiert.

Als Hauptmonomere für die erfindungsgemäße Polymerzusammensetzund sind Acrylsäure- und Methacrylsäureester des Methanols, Ethanols, Isobutanols, n-Butanols, tert. Butanols und 2-Äthylhexanols von besonderem Interesse.

Es erwies sich als besonders vorteilhaft, eine Kombination von Monomeren gemäß Anspruch 1 zu verwenden, deren Homopolymere Glasumwandlungstemperaturen von unter -50°C, vorzugsweise <-60°C, z.B. 2-Ethylhexylacrylat, Butylacrylat, Dodecylmethacrylat, Dodecylacrylat, bzw. eine Glasumwandlungstemperatur über +50°C, vorzugsweise > +60°C, z.B. Methylmethacrylat, bzw. Butylacrylat aufweisen.

Zusätzlich werden bei den erfindungsgemäßen Dispersionen 0,1 - 1,0 % vorzugsweise 3 - 5 C-Atome enthaltender monoolefinisch ungesättigter Mono- und/oder Dicarbonsäuren, wie z.B. Acrylsäure, Methacrylsäure, Maleinsäure. Fumarsäure verwendet.

Weiters ist es ein Merkmal der Erfindung, 1 - 5 Gew.-%, bezogen auf (a) + (b) eines N-Methylolamides einer ungesättigten Carbonsäure, wie z.B. N-Methylolacrylamid vorzugsweise in Kombination mit einem weiteren wasserlöslichen, colopymerisierbaren Monomeren in einer Menge von 0 - 3 Gew.-%, vorzugsweise 1 - 3 Gew.-%, bezogen auf (a) + (b), wie z.B. N-Vinylpyrrolidon, 2-Hydroxyethylacrylat, 2-Hydroxypropylacrylat, Acrylamid, Vinylsulfonat, wasserlösliche ungesättigte Carbonsäuren, vorzugsweise Acrylsäure, Methacrylsäure einzusetzen.

Weiters besteht die Möglichkeit, andere Comonomere, wie z.B. Styrol, Vinylacetat, Vinylchlorid, Butadien, Cl-Butadien, Vinylsilane, bevorzugt Vinyltriethoxysilane, Vinyltri(2-methoxy-, ethoxy)silane, gamma-Methacryloxypropyltrimethoxysilane einzusetzen.

Es ist bereits seit langem bekannt, daß Kunstsoffzusätze zu hydraulisch abbindenden Bindemitteln Verbesserungen der mechanischen Eigenschaften, wie Biegezugfestigkeit, Bruchfestigkeit, Elastizitätsmodul, Schlagzähigkeit, usw. Bewirken.

Zement/Polymerdispersionsmischungen sind bereits in mehreren Patenten und Schriften beschrieben worden:

DE-A 1182 128, DE-A 1646 524, DE-C 1495 748, Firmenschrift von Roehm and Haas Comp., Phil. 3.1.1969, AT-A 359904 (Perlmoser), "Encyclopedia of Polymer Science and Technology", John Wiley & Sons Inc., New York 1965, Vol. 2, S 727, "Encyclopedia of Polymer Science and Technology", John Wiley & Sons Inc., New York 1967, Vol.6, S 397 - 402. US-Patent 2 662 064, Canadian Patent Nr. 1 143 385, Französisches Patent 8 027 085, US-Patent 4 039 345, US-Patent 4 075 528.

Der Nachteil dieser bekannten Produkte liegt darin, daß sie mehrfach auf Basis von Neopren- oder SBR-Latices aufgebaut sind und somit nicht für alle Zwecke genügend witterungsbeständig sind. Der Kunstsoffanteil, bezogen auf Zement, beträgt nach dem oben erwähnten Stand der Technik 3 bis max. 35 % Kunststoff, bezogen auf hydraulische Bindemittel, wobei zwecks besserer Verarbeitung noch Wasser zugesetzt wird. Dies verschlechtert aber auf Grund des höheren W/Z Faktors die mechanischen Eigenschaften des Endproduktes.

Mit der vorliegenden Erfindung ist es möglich, eine Polymerdispersion zu konzipieren, die in der Lage ist, Kunststoff/Zementmischungen mit bis zu 60 % Kunststoff, bezogen auf anorganische Bindemittel, zu ermöglichen, und dann noch zusätzlich bis zu 200 % (berechnet auf das anorganische Bindemittel) andere Zuschlagstoffe aufzunehmen, im Stand ist. Das in der Polymerdispersion vorhandene Wasser reicht dabei aus, eine gut verarbeitbare Masse zu erhalten. Auf diese Weise bleibt der erzielte W/Z-Faktor niedrig, was bekanntlich eine maximale Festigkeit der Zementmatrix gewährleistet.

Diese Zweikomponentensysteme, bei denen Zement mit dem Wasseranteil der Polymerdispersion hydratisiert wird, zeigen je nach der Glasübergangstemperatur (Tg) des Polymers, insbesondere bei Tg von -40°C bis 0°C, mehr oder weniger entropieelastische Eigenschaften, sodaß man beinahe von "Gummibeton" sprechen kann (bei enstspr. niedriger Tg).

Die erwähnten Zweikomponentensysteme mit hoher Dehnfähigkeit finden Verwendung als wasserdichte und witterungsbeständige Dichtungsmassen (Dachbeschichtungen). Eine weitere wichtige Verwendung solcher Zweikomponentensysteme ist der Korrosionsschutz für Stahlbeton. Es hat sich gezeigt, daß diese Stoffe gegen die korrosiven Industriegase Kohlendioxid und Schwefeldioxid undurchlässig sind. Ausschlaggebend dafür ist (wahrscheinlich) der hohe Kunststoffgehalt, bezogen auf das hydraulische Bindemittel, dieser Systeme. Gleichzeitig weisen diese Massen eine ausgezeichnete Wasserdampfdurchlässigkeit auf, eine Eigenschaft, die im Baugewerbe von besonderer Bedeutung ist.

Die konzentrierten Polymerdispersionen sollen transparente, lichtechte, verseifungs- und witterungsbeständige Filme liefern und hochkonzentrierte wasserarme Kunststoff/Zementmischungen bilden, die im ausgehärteten Zustand eine hohe Dehnfähigkeit bis zu 300 % aufweisen.

Es wurde gefunden, daß Polymerdispersionen mit der im Anspruch 1 definierten Zusammensetzung die oben erwähnten Eigenschaften aufweisen. Vorteilhaft ist dabei die Mitverwendung einer ungesättigten Carbonsäure, z.B. (Meth)acrylsäure sowie eines N-Methylolamides einer ungesättigten Carbonsäure, z.B., N-Methylolacrylamid in Zusammenwirkung mit einem hiermit copolymerisierbaren anderen wasserlöslichen Comonomeren. (Unter "wasserlöslich" versteht man, daß sich das Monomer bei der Polymerisationstemperatur zu > 5 Gew.-% in Wasser löst).

Die erfindungsgemäßen Polymerdispersionen sind im wesentlichen reine Polyacrylatdispersionen, die durch Polymerisation einer Mischung bestehend aus

a) 50 - 97 Gew.-%, bezogen auf (a) + (b) mindestens eines nicht waserlöslichen Monomeren, dessen Homopolymer eine Tg < -50°C aufweist;

b) 3 - 50 Gew.-%, bezogen auf (a) + (b), mindestens eins mit a) copolymerisierbaren, nicht wasserlöslichen Monomeren, dessen Homopolymer eine Tg > +50° aufweist;

c) 0,1 - 1,0 Gew.-%, bezogen auf (a) + (b), einer ungesättigten Carbonsäure;

d) 1,0 - 5 Gew.-%, bezogen auf (a) + (b), eines N-Methylolamides einer ungesättigten Carbonsäure;

e) 0 - 3 Gew.-%, vorzugsweise 1 - 3 Gew.-%, bezogen auf (a) + (b), eines mit (c) und (d) copolymerisierbaren weiteren wasserlöslichen Monomeren;

f) 0 - 100 Gew.-%, bevorzugt 0 - 50 Gew.-%, insbesondere 0 - 20 Gew.-%, bezogen auf (a) + (b), an weiteren nicht wasserlöslichen Comonomeren

erhalten worden sind.

Diese Monomeren werden vorzugsweise in wäßriger Emulsion bei pH 2-6 polymerisiert.

Als Hauptmonomere für die erfindungsgemäße Polymerzusammensetzung sind Acrylsäure- und Methacrylsäureester der Methanols, Ethanols, Isobutanols, n-Butanols, tert. Butanols und 2-Äthylhexanols von besonderem Interesse.

Es erwies sich als besonders vorteilhaft, eine Kombination von Monomeren gemäß Anspruch 1 zu verwenden, deren Homopolymere Glasumwandlungstemperaturen von unter -50°C z.B. 2-Ethylhexylacrylat, Butylacrylat, Dodecylmethacrylat, Dodecylacrylat, bzw. eine Glasumwandlungstemperatur über +50°C z.B. Methylmethacrylat aufweisen. Zusätzlich werden bei den erfindungsgemäßen Dispersionen 0,1 - 1,0 % vorzugsweise 3 - 5 C-Atome enthaltender monoolefinisch ungesättigter Mono- und/oder Dicarbonsäuren, wie z.B. Acrylsäure, Methacrylsäure, Maleinsäure, Furansäure verwendet.

Weiters ist es ein Merkmal der Erfindung, 1-5 Gew.-%, bezogen auf (a) + (b) eines N-Methylolamides einer ungesättigten Carbonsäure, wie z.B. N-Methylolacrylamid vorzugsweise in Kombination mit einem weiteren wasserlöslichen, copolymerisierbaren Monomeren in einer Menge von 0-3 Gew.-%, vorzugsweise 1-3 Gew.-%, bezogen auf (a) + (b), wie z.B. N-Vinylpyrrolidon, 2-Hydroxyethylacrylat, 2-Hydroxypropylacrylat, Acrylamid, Vinylsulfonat, wasserlösliche ungesättigte Carbonsäuren, vorzugsweise Acrylsäure, Methacrylsäure einzusetzen.

Weiters besteht die Möglichkeit, andere Comonomere, wie z.B. Styrol, Vinylacetat, Vinylchlorid, Butadien, Cl-Butadien, Vinylsilane, bevorzugt Vinyltriethoxysilane, Vinyltri(2-methoxy-, ethoxy)silane, gamma-Methacryloxypropyltrimethoxysilane einzusetzen.

Ein besonderer Vorteil ist es, die erfindungsgemäße Polymerdispersion ohne Einsatz von Acrylnitril zu konzipieren. Acrylnitril stellt wegen seiner Giftigkeit sowohl bei der Herstellung als auch bei der Anwendung eine ernsthafte Belastung der Umwelt dar.

Weitere bevorzugte Zusammensetzungen der Polymere sind den Unteransprüchen und der nachfolgenden Beschreibung zu entnehmen.

Vorteilhaft für die guten mechanischen Eigenschaften der erfindungsgemäßen Polymerdispersionen ist die Verwendung der hier definierten wasserlöslichen Monomeren, wobei die Kombination von N-Methylolacrylamid mit einem anderen oder mehreren wasserlöslichen Monomeren zu besonders vorteilhaften Eigenschaften führt. Das erfindungsgemäße Polymere wird bevorzugt in wäßriger Emulsion hergestellt. Dabei werden z.B. unter Anwendung eines üblichen einstufigen Emulsionspolymerisationsverfahrens die wasserlöslichen und die nicht wasserlöslichen Monomere getrennt voneinander in der Weise in einem vom Fortgang der Polymerisation abhängigen Verhältnis in den Reaktor dosiert, daß ein Überschuß an Monomer (d) vermieden wird.

Die Palette der verwendeten Emulgatoren erstreckt sich insbesondere auf die ethoxylierten Ester der langkettigen, aliphatisch gesättigten oder ungesättigten Monocarbonsäuren mit 14-20, vorzugsweise 16-18 C-Atomen und/oder die ethoxylierten Alkylphenole mit 8 bis 9 C-Atomen in der Alkylgruppe, wobei der Ethoxylierungsgrad bei beiden Produktgruppen zwischen 5-35 Mol Ethylenoxideinheiten vorzugsweise zwischen 10-20 Mol Ethylenoxideinheiten liegt.

Die Menge dieser Emulgatoren liegt im Bereich von 2-10 Gew.-%, vorzugsweise 6-8 Gew.-% berechnet auf Gesamtmonomere. Bevorzugt werden zusätzlich geringe Mengen anionaktiver Emulgatoren, z.B. sulfatierte Fettalkohole mit 8-14, vorzugsweise 10-12 C-Atomen in der Kette, und zwar 0,1-0,5 vorzugsweise 0,1-0,3 %, oder auch ethoxylierte Alkohole mit einer Kettenlänge von 10-15, vorzugsweise 11-13 C-Atomen, in einem Prozentsatz von 0,3-1 %, vorzugsweise 0,5-0,7 % eingesetzt.

Es können die üblichen wasserlöslichen Initiatoren wie Ammoniumperoxodisulfat, Kaliumperoxodisulfat, Natriumperoxodisulfat, fallweise als Redoxsystem mit Na-Bisulfit, sowie den üblichen Redoxkatalysatoren aus Wasserstoffperoxid oder tert.-Butylhydroperoxid als Oxidationskomponente und aus Natriuformaldehydsulfoxylat als Reduktionskomponente verwendet werden. Als Kettenregler eignen sich die üblichen langkettigen Merkaptane sowie auch Hydrochinon.

Die Temperatur kann z.B. zwischen 65 und 85°C variiert werden. Der pH-Wert beträgt während der Polymerisation vorzugsweise 2,0-6,0, der pH-Wert des fertigen Produktes wird auf 4,5-9,5, vorzugsweise auf 7,0 eingestellt.

Man erhält Dispersionen, die in Kombination mit hydraulisch abbindenden Bindemitteln, wie eingangs beschrieben besonders günstige Verarbeitungseigenschaften (geringe Viskosität bei hohem Kunststoffanteil) und mechanische Eigenschaften, wie hohe Dehnung, ergeben, wenn man ein zweistufiges Verfahren zu deren Herstellung anwendet. Dieses Verfahren ist dadurch gekennzeichnet, daß in einem ersten Schritt die wasserlöslichen Monomeren in Gegenwart der für die Emulsionspolymerisation erforderlichen Emulgatoren bis zu einem Umsatz von 20-30% polymerisiert werden und danach die weiteren Monomere dem Reaktionsgemisch gegebenenfalls stufenweise zugesetzt werden.

Die mit diesen Dispersionen hergestellten Zementschlämme haben je nach Art des verwendeten Emulgators und Temperatur eine Verarbeitungszeit von 2-8 Stunden.

Im Gegensatz zu Dispersionen, die aus gleichen Komponenten in einer üblichen Einschrittverfahren hergestellt werden, führen in einem solchen Zweischrittverfahren hergestellte Dispersionen zu einer weit niedrigeren Viskosität der Zementschlämme, was für eine bessere Benetzung spricht.

Auf Grund dieser Eigenschaften eignen sich die Zementschlämme für die Beschichtung und Abdichtung von Flachdächern, Terrassen, Kellern, etc., wobei die gute Haftung auf Untergründen wie Bitumen, Beton, Eisenblech hervorzuheben ist.

Weiters eignen sich diese Mischungen als Korrosionsschutz und für die Reparatur von verwitterten Betonoberflächen.

Die Dispersionen eignen sich weiters für die Herstellung von Haftklebstoffen für die Kuverterzeugung, Heftpflaster oder selbsthaftende Etiketten.

Für die Herstellung der erfindungsgemäßen Polymerdispersionen hat sich folgende Vorgangsweise bewährt:

Stufe 1:

In der gesamten, für die Polymerisation der Dispersion notwendigen Wassermenge werden die erforderlichen Emulgatoren gelöst und die wasserlöslichen Monomere [(c), (d), (e)] zugesetzt. Die Konzentration der gelösten wasserlöslichen Monomere liegt dabei für die oben genannte bevorzugte Monomerzusammensetzung im Bereich von 3-6 Gew.-%, vorzugsweise 3,5-4,5 Gew.-%. Überraschenderweise zeigt sich, daß höhere Konzentrationen zu keiner brauchbaren Dispersion führen und auch geringere Konzentrationen zur Koagulation führen.

Ebenfalls ist es überraschend, daß die Polymerisation bevorzugt bei pH-Werten von 5,5 bis 6,0 durchgeführt werden kann. Höhere pH-Werte als 5,5 bis 6,0 können zur Koagulation der Dispersion führen. Die Polymerisation in Lösung erfolgt in der Regel in einem Temperaturbereich von 40-60°C, vorzugsweise bei 50-55°C. In Abweichung zum einstufigen Verfahren wird die Gesamtmenge der Kettenüberträger, wie z.B Hydrochinon, oder tert.-Dodecylmerkaptan in einer Konzentration von 0,012-0,017 Gew.-%, bezogen auf die Menge des Reaktionsgemisches, bereits bei der Lösungspolymerisation zugesetzt.

Auch die gesamte Menge der Emulgatoren wird in der ersten Stufe, d.h. der Lösungspolymerisation, eingesetzt.

Die Palette der verwendeten Emulgatoren erstreckt sich im wesentlichen auf die ethoxylierten Ester der langkettigen, aliphatisch gesättigten oder ungesättigten Monocarbonsäuren mit 14-20, vorzugsweise 16-18 C-Atomen und/oder die ethoxylierten Alkylphenole mit 8 bis 9 C-Atomen in der Alkylgruppe, wobei der Ethoxylierungsgrad bei beiden Produktgruppen zwischen 5-35 Mol Ethylenoxideinheiten vorzugsweise zwischen 10-20 Mol Ethylenoxideinheiten liegt.

Die Menge dieser Emulgatoren liegt im Bereich von 2-10 Gew.-%, vorzugsweise 6-8 Gew.-% berechnet auf Gesamtmonomere. Zusätzlich werden geringe Mengen anionaktiver Emulgatorentypen, z.B. sulfatierte Fettalkohole mit 8-14, vorzugsweise 10-12, C-Atomen in der Kette und zwar 0,1-0,5, vorzugsweise 0,1-0,3 %, als auch ethoxylierte Alkohole mit einer Kettenlänge von 10-15, vorzugsweise 11-13 C-Atomen, in einem Prozentsatz von 0,3-1 %, vorzugsweise 0,5-0,7 % mitverwendet.

Es können die üblichen wasserlöslichen Initiatoren wie Ammoniumperoxodisulfat, Kaliumperoxodisulfat, Natriumperoxodisulfat, fallweise als Redoxsystem mit Na-Bisulfit, sowie die üblichen Redoxkatalysatoren aus Wasserstoffperoxid oder tert.- Butylhydroperoxid als Oxidationskomponente und aus Natriumformaldehydsulfoxylat als Reduktionskomponente verwendet werden.

Stufe 2:

In das Reaktionsgemisch der Stufe 1 werden ohne Unterbrechung der Reaktion bei einem Umsatz der wäßrigen Monomeren von mindestens 15 %, bevorzugt 20-30 %, die wasserunlöslichen Monomeren und üblichen Initiatoren die einer Temperatur von 60-80°C, vorzugsweise 70°C dazudosiert.

Die folgenden Beispiele dienen der näheren Erläuterung der Erfindung, ohne diese einzuschränken:

Beispiel 1:

Gearbeitet wurde in einer Planschliffglasapparatur mit 2 l Inhalt, Metallankerrührer, Doppelmantel, Rückflußkühler und Dosiergefäßen. 179,2 g entionisiertes Wasser wird vorgelegt. 1,8 g Acrylsäure zugesetzt und mit einer 50%-igen NaOH-Lösung wird der pH-Wert auf ca. 6,0 eingestellt. Dann werden 0,08 g Natriumformaldehydsulfoxylat, 9,0 g N-Methylolacrylamid, 5,3 g N-Vinylpyrrolidon, 0,4 g Isopropylalkohol, 0,06 g Hydrochinon zugesetzt. Zu dieser Lösung wird noch folgende Emulgatorlösung zugesetzt: in 152,6 g entionisiertem Wasser werden 1,8 g eines sulfatierten Laurylalkohols, 6,4 g eines ethoxylierten Isotridecanols (Ethoxylierungsgrad 5), sowie 37,0 g ethoxylierten Stearinsäureesters (Ethoxylierungsgrad 20) und 0,4 g Natriumbisulfits (NaHSO3) gelöst.

Dann werden 0,4 g Ammoniumperoxisulfat in 3,6 g entionisiertem Wasser gelöst und zum obigen Gemisch zugesetzt und bei 55°C 1,5 Stunden polymerisiert.

Anschließend werden Zulauf I und Zulauf II bei 70°C 3 Stunden lang gleichmäßig zudosiert.
Der Zulauf I besteht aus 479,0 g 2-Ethylhexylacrylat, 46,0 g Methylmethacrylat und 1,8 g Acrylsäure.
Zulauf II besteht aus 1,35 g Ammoniumperoxisulfat gelöst in 60,0 g entionisiertem Wasser.
Nach Beendigung des Zulaufes werden 0,4 g t-Butylperoxid (80%-ig) gelöst in 4,0 g entionisiertem Wasser, sowie 0,5 g Natriumformaldehydsulfoxylat gelöst in 5,0 g entionisiertem Wasser zugesetzt und 1,5 Stunden bei 90°C nachpolymerisiert.
Nach dem Abkühlen erhält man eine Polymerdispersion mit ca 59% Trockensubstanzgehalt, pH-Wert 5,4, Viskosität ca. 300 mPas, die einen stark klebrigen Film ergibt.

Beispiel 2:

In der gleichen Apparatur wie in Beispiel 1 werden 179,2 g entionisiertes Wasser vorgelegt, 1,8 g Acrylsäure zugesetzt und mit 50%-iger Natronlauge auf einen pH-Wert von 6,0 eingestellt. Dann werden 0,08 g Natriumformaldehydsulfoxylat, 9,0 g N-Methylolacrylamid, 5,3 g N-Vinylpyrrolidon, 0,4 g Isopropylalkohol und 0,06 g Hydrochinon zugesetzt.

Zu dieser Lösung wird noch folgende Emulgatorlösung zugesetzt: In 152,6 g entionisiertem Wasser werden 1,8 g sulfatierten Laurylalkohols, 6,4 g ethoxylierten Isotridecandiols (Ethoxylierangsgrad 5), 24,6 g ethoxylierten p-Nonylphenols (Ethoxylierungsgrad 13), 16,4 g ethoxylierten p-Nonylphenols (Ethoxylierungsgrad 10), sowie 0 4 g Natriumbisulfits (NaHSO3) gelöst. Nach dem gleichen Verfahren wie in Beispiel 1 und gleichen Zuläufen I und II erhält man eine ca. 59%-ige Polymerdispersion mit einer Viskosität von ca 200 mPas (25°C Epprechtviskosimeter), pH-Wert 5,6, die einen stark klebrigen Film ergibt.

Beispiel 3:

In der gleichen Appartur wie in Beispiel 1 werden 179 g entionisiertes Wasser vorgelegt, darin werden 9,0 g N-Methylolacrylamid, 5,3 g Acrylamid, 0,4 g Isopropylalkohol, 0,5 g Natriumacetat und 0,06 g Hydrochinon gelöst. Dazu setzt man eine Emulgatorlösung entsprechend dem Beispiel 2.

Anshließend gibt man dazu 0.4 g Ammoniumperoxodisulfat gelöst in 4,0 g entionisiertem Wasser und polymerisiert 1,5 Stunden bei 55°C. Anschließend werden Zulauf I und Zulauf II bei 70°C 3 Stunden lang gleichmäßig zudosiert.
Der Zulauf I besteht aus 447,0 g 2-Ethylhexylacrylat, 75,9 g t-Butylacrylat und 3,6 g Acrylsäure.
Der Zulauf II besteht aus 1,35 g Ammoniumperoxodisulfat gelöst in 60,0 g entionisiertem Wasser.

Man verfährt wie in Beispiel 1 und erhält eine ca. 59%-ige Polymerdispersion mit ca. 150 mPas (25°C Epprechtviskosimeter), pH-Wert 4,2, die einen stark klebrigen Film ergibt.

Beispiel 4:

In der gleichen Apparatur wie in Beispiel 1 werden im Reaktionsgefäß 258,0 g entionisiertes Wasser vorgelegt und darin 6,4 g ethoxylierten Isotridencandiols (Ethoxylierungsgrad 5), 1,8 g sulfatierten Laurylalkohols, 37,0 g ethoxylierten Esters der Stearinsäure (Ethoxylierungsgrad 10) und 9,0 g ethoxylierten Esters der Stearinsäure (Ethoxylierungsgrad 20), sowie 0,06 g Hydrochinon unter Rühren und Erwärmen auf 85°C gelöst.

Aus getrennten Dosiergeräten dosiert man zunächst Zulauf I und Zulauf II mit einer Geschwindigkeit, daß der Zulauf innerhalb 3 Stunden beendet ist.

Der Zulauf I besteht aus 46,0 g Methylmethacrylat, 479,0 g 2-Ethylhexylacrylat und 3,6 g Acrylsäure.

Der Zulauf II besteht aus 0,67 g t-Butylhydroperoxid 80%-ig und 10,0 g entionisiertem Wasser.

Fünf Minuten nach dem Beginn des Zulaufes I und II beginnt man mit der Zudosierung des Zulaufes III, bestehend aus 9,0 g N-Methylolacrylamid und 69,0 g entionisiertem Wasser, in der Weise, daß der Zulauf III gleichmäßig mit den Zuläufen I und II innerhalb 3 Stunden beendet ist.

Während der Polymerisation wird die Reaktionstemperatur auf 80-85°C gehalten und diese Temperatur 1 Stunde zur Nachpolymerisation aufrecht gehalten.

Für die Nachreaktion werden nach Ende des Zulaufes 0,2 g t-Butylhydroxyperoxids 80%-ig, gelöst in 4,0 g entionisiertem Wasser, sowie 0,5 g Natriumformaldehydsulfoxylat, gelöst in 5,0 g entionisiertem Wasser, zugesetzt.

Nach Abkühlen erhält man eine ca. 59%-ige Polymerdispersion mit einer Viskosität von ca 500 mPas (25°C Epprechtviskosimeter), die einer stark klebrigen Film ergibt.

Beispiel 5:

Gearbeitet wurde in einer Planschliffglasapparatur mit 2 l Inhalt, Metallankerrührern, Doppelmantel, Rückflußkühler und Dosiergefäßen. 258 g entionisiertes Wasser wurden vorgelegt und darin 6,4 g ethoxilierten Isotridecanols (Ethoxylierungsgrad 5), 1,8 g sulfatierten Laurylalkohols, 37,0 g ethoxylierten Esters der Stearinsäure (Ethoxylierungsgrad 10), sowie 0,06 g Hydrochinon unter Rühren und Erwärmen auf 80°C gelöst.

Aus getrennten Dosiergeräten dosiert man zunächst Zulauf I und Zulauf II mit einer Geschwindigkeit, daß der Zulauf innerhalb 3 Stunden beendet ist. Der Zulauf I besteht aus 45,4 g Methylmethacrylat, 479,0 g 2-Ethylhexylacrylat, 5,3 g 2-Hydroxyäthylacrylat sowie 3,6 g Acrylsäure.

Zulauf II besteht aus 0,67 g t-Butylhydroperoxid 80 %-ig und 10,0 g entionisiertem Wasser.

5 Minuten nach Beginn des Zulaufes I und II beginnt man mit der Zudosierung des Zulaufes III, bestehend aus 9,0 g Methylolacrylamid und 69,0 g entionisiertem Wasser, in der Weise, daß Zulauf III gleichmäßig mit den Zuläufen I und II innerhalb 3 Stunden beendet ist. Während der Polymerisation wird die Reaktionstemperatur auf 80-85°C gehalten und diese Temperatur 1 Stunde zur Nachpolymerisation aufrechtgehalten. Nach dem Abkühlen neutralisiert man die Dispersion mit einer 15%-igen Ätznatronlösung auf pH-Wert von ca. 7 und erhält eine ca. 59%-ige Dispersion mit einer Viskosität von ca 1000 mPas (25°C Epprecht Viskosimeter), die ebenfalls einen stark klebenden Film ergibt.

Beispiel 6:

In der gleichen Apparatur und nach dem gleichen Verfahren wie in Beispiel 5 wird folgende Zusammensetzung des Zulaufes I und III eingesetzt:

| | |
|---|---|
| Zulauf I: | 46,0 g Methylmethacrylat |
| | 479,0 g 2-Ethylhexylacrylat |
| | 3,6 g Acrylsäure |
| Zulauf II: | 0,67 g tert.-Butylhydroperoxid |
| | 10,0 g $H_2O$ entionisiert |
| Zulauf III: | 9,0 g N-Methylolacrylamid |
| | 5,3 g Acrylamid |
| | 69.0 g Wasser entionisiert |

Das Ergebnis ist eine Polymerdispersion mit ca. 59 % Trockensubstanz mit einer Viskosität von ca. 1500 mPas (25°C Epprecht Viskosimeter), die einen stark klebrigen Film ergibt.

Beispiel 7:

In der gleichen Apparatur und nach dem gleichen Verfahren wie in Beispiel 5 wird folgende Zusammensetzung des Zulaufes I und III eingesetzt:

| Zulauf I: | 46,0 g Methylmethacrylat |
| | 479,0 g 2-Ethylhexylacrylat |
| | 3,6 g Acrylsäure |
| Zulauf II: | 0,67 g t-Butlyhydroperoxid |
| | 10,0 g entionisiertes Wasser |
| Zulauf III: | 9,0 g N-Methylolacrylamid |
| | 5,3 g N-Vinylpyrrolidon |
| | 69,0 g Wasser entionisiert |

Das Ergebnis ist eine ca. 59%-ige Polymerdispersion mit einer Viskosität von ca. 500 mPas (25°C Epprecht Viskosimeter), die einen stark klebrigen Film ergibt.

Beispiel 8:

In der gleichen Apparatur und nach dem gleichen Verfahren wie in Beispiel 5 werden 285 g entionisiertes Wasser vorgelegt und darin 6,4 g ethoxilierten Ethylalkohols (Ethoxylierungsgrad 5), 1,8 sufatierten Laurylalkohols, 24,6 g ethoxilierten p-Nonylphenols (Ethoxylierungsgrad 13) und 16,4 g ethoxilierten p-Nonylphenols (Ethoxylierungsgrad 10) sowie 0,6 g Hydrochinon gelöst, wobei die Zuläufe I und III gleich sind wie im Beispiel 3.

Man erhält eine ca. 59%-ige Polymerdispersion mit einer Viskosität von ca 300 mPas (25°C Epprecht Viskosimeter), die einen stark klebrigen Film ergibt.

B) Einsatz der Polymerdispersionen für die Herstellung von Zementschlämmen

Mit den nach Beispielen 5 bis 8 hergestellten Polymerdispersionen wurden Zementschlämme folgender Zusammensetzung hergestellt:

| | |
|---|---|
| Zement | 33,3 Gew.tle |
| Quarzsand 0,1-0,3 mm | 33,3 Gew.tle |
| Polymerdispersion | 33,3 Gew.tle |
| | 99,9 Gew.tle |

In der Tabelle I sind die Eigenschaften der hergestellten Schlämme, sowie die Eigenschaften der ausgehärteten Probekörper angegeben:

Tabelle I

| Schlämme | Viskosit mPas 25°C | Durchlaufmenge DIN B10 in g* | Topfzeit Stdn. | Zugscherfestigkeit 28 T(N/mm2) | Dehnung n.Alterg. 28 T in % |
|---|---|---|---|---|---|
| AB 1 | 13.000 | 10 g | 3 | 0,315 | 150 % |
| AB 2 | 14.000 | 14 g | 3 | 0,305 | 150 % |
| AB 3 | 11.000 | 16 g | 3 | 0,350 | 160 % |
| AB 4 | 10.000 | 12 g | 8 | 0,310 | 140 % |

* Es werde die Menge gewogen, die durch einen DIN Becher mit einem Durchmesser von 10 mm innerhalb 3 Minuten durchfließt.

Beispiel 9:

Gearbeitet wurde in einer Planschliffglasapparatur mit 2 l Inhalt, Metallankerrühre, Doppelmantel, Rückflußkühler und Dosiergefäßen. 179,2 g entionisiertes Wasser wird vorgelegt, 1,8 g Acrylsäure zugesetzt und mit einer 50%-igen NaOH-Lösung wird der pH-Wert auf ca. 6,0 eingestellt. Dann werden 0,08 g Natriumformaldehydsulfoxylat, 9,0 g N-Methylolacrylamid, 5,3 g N-Vinylpyrrolidon, 0,4 g Isopropylalkohol, 0,06 g Hydrochinon zugesetzt. Zu dieser Lösung wird noch folgende Emulgatorlösung zugesetzt: In 152,6 g entionisiertem Wasser werden 1,8 g eines sulfatierten Laurylalkohols, 6,4 g eines ethoxylierten Isotridecanols (Ethoxylierungsgrad 5), sowie 37,0 g ethoxylierten Stearinsäureesters (Ethoxylierungsgrad 20) und 0,4 g Natriumbisulfits (NaHSO3) gelöst.

Dann werden 0,4 g Ammoniumperoxisulfat in 3,6 g entionisiertem Wasser gelöst und zum obigen Gemisch zugesetzt und bei 55°C 1,5 Stunden polymerisiert.

Anschließend werden Zulauf I und Zulauf II bei 70°C 3 Stunden lang gleichmäßig zudosiert.

Der Zulauf I besteht aus 479,0 g 2-Ethylhexylacrylat, 46,0 g Methylmethacrylat und 1,8 g Acrylsäure.

Zulauf II besteht aus 1,35 g Ammoniumperoxisulfat gelöst in 60,0 g entionisiertem Wasser.

Nach Beendigung des Zulaufes werden 0,4 g t-Butylperoxid (80%-ig) gelöst in 4,0 g entionisiertem Wasser, sowie 0,05 g Natriumformaldehydsulfoxylat gelöst in 5,0 g entionisiertem Wasser zugesetzt und 1,5 Stunden bei 90°C nachpolymerisiert.

Nach dem Abkühlen erhält man eine Polymerdisperison mit ca. 59 % Trockensubstanzgehalt, pH-Wert 5,4, Viskosität ca. 300 mPas, die einen stark klebrigen Film ergibt.

Beispiel 10:

In der gleiten Apparatur wie in Beispiel 9 werden 179,2 g entionisiertes Wasser vorgelegt, 1,8 g Acrylsäure zugesetzt und mit 50 %-iger Natronlauge auf einen pH-Wert von 6,0 eingestellt.

Dann werden 0,08 g Natriumformaldehydsulfoxylat, 9,0 g N-Methylolacrylamid, 5,3 g N-Vinylpyrrolidon, 0,4 g Isopropylalkohol und 0,06 g Hydrochinon zugesetzt.

Zu dieser Lösung wird noch folgende Emulgatorlösung zugesetzt: In 152,6 g entionisiertem Wasser werden 1,8 g sulfatierten Laurylalkohols, 6,4 g ethoxylierten Isotridecandiols (Ethoxylierungsgrad 5), 24,6 g ethoxylierten p-Nonylphenols (Ethoxylierungsgrad 13), 16,4 g ethoxylierten p-Nonylphenols (Ethoxylierungsgrad 10), sowie 0,4 g Natriumbisulfits (NaHSO3) gelöst.

Nach dem gleichen Verfahren wie in Beispiel 5 und gleichen Zuläufen I und II erhält man eine ca. 59%-ige Polymerdispersion mit einer Viskosität von ca. 200 mPas (25°C Epprecht Viskosimeter), pH-Wert 5,6, die einer stark klebrigen Film ergibt.

Beispiel 11:

In der gleichen Apparatur wie in Beispiel 9 werden 179,2 g entionisiertes Wasser vorgelegt, darin werden 9,0 g N-Methylolacrylamid, 5,3 g Acrylamid, 0,4 g Isopropylalkohol, 0,5 g Natriumacetat und 0,06 g Hydrochinon gelöst. Dazu setzt man eine Emulgatorlösung entsprechend dem Beispiel 10.

Anschließend gibt man dazu 0,4 g Ammoniumperoxodisulfat gelöst in 4,0 g entionisiertem Wasser und polymerisiert 1,5 Stunden bei 55°C. Anschließend werden Zulauf I und Zulauf II bei 70°C 3 Stunden lang gleichmäßig zudosiert.

Der Zulauf I besteht aus 447,0 g 2-Ethylhexylacrylat, 75,9 g t-Butylacrylat und 3,6 g Acrylsäure.

Der Zulauf II besteht aus 1,35 g Ammoniumperoxodisulfat gelöst in 60,0 g entionisiertem Wasser.

Man verfährt wie in Beispiel 9 und erhält eine ca. 59%-ige Polymerdispersion mit ca. 150 mPas (25°C Epprechtviskosimeter), pH-Wert 4,2, die einen stark klebrigen Film ergibt.

Einsatz der Polymerdispersion für die Herstellung von Zementschlämmen

Mit den nach Beispiel 9 bis 11 hergestellten Polymerdispersionen werden Zementschlämme folgender Zusammensetzung hergestellt:

| Zement | 33,3 Gew.tle |
| Quarzsand 0,1-0,3 mm | 33,3 Gew.tle |
| Polymerdispersion | 33,3 Gew.tle |
| | 99,9 Gew.tle |

In der Tabelle II sind die Eigenschaften der hergestellten Schlämme, sowie die Eigenschaften der ausgehärteten Probekörper angegeben:

EP 0 529 695 A2

Tabelle II

| Dispers. von Beispiel | Viskosit mPas 25°C | Durchlaufmenge DIN B10 3 Min (g) | Topfzeit Stdn. | Zugscherfestigkeit 28 T(N/mm2) | Dehnung n.Alterg. 28 T in % |
|---|---|---|---|---|---|
| 5 | 4.500 | alles in 1 Min | 4 | 0,265 | 240 % |
| 6 | 3.900 | alles in 1 Min | 8 | 0,240 | 220 % |
| 7 | 5.300 | alles in 1 Min | 8 | 0,230 | 210 % |

## Patentansprüche

1. Verfahren zur Herstellung von Copolymerisaten durch radikalische Polymerisation mehrerer olefinisch ungesättigter Monomeren in wäßriger Emulsion in Gegenwart von Emulgatoren, wobei mindestens eines der Monomeren eine Löslichkeit von > 5 Gew.-% in Wasser unter den Reaktionsbedingungen aufweist, dadurch gekennzeichnet, daß in einem ersten Schritt das oder die wasserlöslichen Monomeren in Gegenwart der Emulgatoren bis zu einem Umsatz von mindestens 15%, vorzugsweise 20 - 30%, polymerisiert und danach das oder die weiteren Monomeren dem Reaktionsgemisch, gegebenenfalls stufenweise, zugesetzt werden.

2. Verfahren nach Anspruch 1, dadurch gekennzeichnet, daß in einem ersten Schritt wasserlösliche Monomere, nämlich
   - 0,1-1,0 Gew.-% einer ungesättigten Carbonsäure (c)
   - 1,0-5 Gew.-% eines N-Methylolamides einer ungesättigten Carbonsäure (d) und
   - 0 - 3 Gew.-%, vorzugsweise 1-3 Gew.-% eines mit den vorgenannten Monomeren copolymerisierbaren weiteren wasserlöslichen Monomeren (e), ausgenommen Acrylnitril und Methacrylnitril
   in Gegenwart der Emulgatoren bei einer Temperatur zwischen 40 und 60°C, vorzugsweise 50-55°C und bei einem pH zwischen 5,5 und 6,0 bis zu einem Umsatz von mindestens 15%, vorzugsweise 20-30 % in Lösung polymerisiert werden, wobei als Radikaldämpfer Hydrochinon oder para-tert. Butylbrenzcatechin eingesetzt wird, und daß in einem zweiten Schritt wasserunlösliche Monomere nämlich:
   - 50-97 Gew.-%, bezogen auf (a) + (b) mindestens eines nicht wasserlöslichen Monomers, dessen Homopolymer eine Tg <-50°C aufweist (a)
   - 3-50 Gew.%, bezogen auf (a) + (b) mindestens eines mit dem zuvor genannten Monomeren copolymerisierbaren nicht wasserlöslichen Monomeren, dessen Homopolymer einer Tg > +50°C aufweist (b) und
   - 0-50 Gew.-% inbesondere 0-20 Gew.-%, bezogen auf (a) + (b), an weiteren nicht wasserlöslichen Comonomeren, wie zB. Styrol, 2-Methylstyrol (f) und dgl.
   dem Reaktionsgemisch, gegebenenfalls stufenweise, zugesetzt und bei einer Temperatur von 60-80°C, vorzugsweise etwa 70°C einer Emulsionspolymerisation unterworfen werden.

3. Verfahren nach Anspruch 1 oder 2, dadurch gekennzeichnet, daß bei der Herstellung des wasserlöslichen Polymeren folgende Emulgatoren Verwendung finden:
   Ethoxylierte Ester der langkettigen, aliphatisch gesättigten oder ungesättigten Monocarbonsäuren mit 14 - 20, vorzugsweise 16 - 18, C-Atomen und/oder die ethoxylierten Alkylphenole mit 8 bis 9 C-Atomen in der Alkylgruppe, wobei der Ethoxylierungsgrad bei beiden Produktgruppen zwischen 5- 35 Mol Ethylenoxideinheiten, vorzugsweise zwischen 10 - 20 Mol Ethylenoxideinheiten, liegt und anionaktive Emulgatoren, zB. sulfatierte Fettalkohole mit 8-14, vorzugsweise 10 - 12 C-Atomen in der Kette, und zwar 0,1 - 0,5, vorzugsweise 0,1 - 0,3%, oder auch ethoxylierte Alkohole mit einer Kettenlänge von 10 - 15, vorzugsweise 11 - 13, C-Atomen.

4. Verfahren nach Anspruch 1, 2 oder 3, dadurch gekennzeichnet, daß die Konzentration der ethoxylierten Ester oder Äther in einem Bereich von 2- 10 Gew.-%, vorzugsweise 6 - 8 Gew.-%, berechnet auf das gesamte Monomergemisch, und die Konzentration der anionaktiven Emulgatoren von 0,1 - 0,5 Gew.%, vorzugsweise 0,1 - 0,3 Gew.%, und die Konzentration der ethoxylierten Alkohole 0,3 - 1,0 Gew.%, vorzugsweise 0,5 - 0,7 Gew.% beträgt.

5. Verfahren nach Anspruch 1 bis 4, dadurch gekennzeichnet, daß die Temperatur bei der Polymerisation in der ersten Stufe 40 - 60°C, vorzugsweise 50 - 55°C beträgt, und daß die Temperatur in der Stufe 2 60 - 80°C, vorzugsweise 70°C beträgt.

6. Verfahren nach Anspruch 1 bis 5, dadurch gekennzeichnet, daß der pH-Wert der ersten Stufe 5,5 - 6,0 beträgt.

7. Verfahren nach Anspruch 1 bis 6, dadurch gekennzeichnet, daß die wasserlöslichen Monomere in einer Konzentration von 3- 6 Gew.-%, vorzugsweise 3,5 - 4,5 Gew.-%, bezogen auf die wäßrige Phase, eingesetzt werden.

8. Verfahren nach Anspruch 1 bis 7, dadurch gekennzeichnet, daß die gesamte Menge von Kettenüberträgern in der ersten Stufe eingesetzt wird.

9. Verfahren nach Anspruch 1 bis 8, dadurch gekennzeichnet, daß der verwendete Kettenüberträger Hydrochinon oder p.tert.-Butylbrenzcatechin ist.

10. Verfahren nach Anspruch 1 bis 9, dadurch gekennzeichnet, daß die Konzentration der Kettenüberträger gesamt 0,012 - 0,017 Gew.-%, bezogen auf die Menge des Reaktionsgemisches, ist.

11. Verfahren nach Anspruch 1 bis 10, dadurch gekennzeichnet, daß der Umsatz in der Stufe 1 bis zu einer Konzentration von 25 Gew.-%, der wasserlöslichen Monomeren erfolgt.

12. Verfahren nach einem der Ansprüche 1 bis 11, dadurch gekennzeichnet, daß (a) n-Butyl, tert.-Butylacrylat, n-Dodecylmethacrylat und/oder 2-Äthylhexyacrylat ist.

13. Verfahren nach einem der Ansprüche 1 bis 12, dadurch gekennzeichnet, daß (b) Methylmethacrylat oder tert.-Butylmethacrylat, Äthylmethacrylat, Phenylmethacrylat, 3,3-dimethyl-2-butylmethacrylat, Isopropylmethacrylat ist.

14. Verfahren nach einem der Ansprüche 1 bis 13, dadurch gekennzeichnet, daß (c) (Meth)acrylsäure, Fumarsäure und/oder Maleinsäure, insbesonder Acrylsäure ist.

15. Verfahren nach einem der Ansprüche 1 bis 14, dadurch gekennzeichnet, daß (d) das N-Methylolamid von (Meth)acrylsäure, Fumarsäure und/oder Maleinsäure ist, insbesondere N-Methylolacrylamid.

16. Verfahren nach einem der Ansprüche 1 bis 15, dadurch gekennzeichnet, daß (e) Acrylamid, N-Vinylpyrrolidon und/oder ein Hydroxyalkyl(meth)acrylat und/oder eine wasserlösliche ungesättigte Carbonsäure, vorzugsweise Acrylsäure oder Methacrylsäure ist.